(19) Europäisches Patentamt
European Patent Office
Office européen des brevets

(11) EP 0 675 173 B1

(12) EUROPÄISCHE PATENTSCHRIFT

(45) Veröffentlichungstag und Bekanntmachung des Hinweises auf die Patenterteilung:
**05.06.2002 Patentblatt 2002/23**

(51) Int Cl.[7]: **C09B 67/00**, C09D 5/08

(21) Anmeldenummer: **95104172.2**

(22) Anmeldetag: **22.03.1995**

(54) **Pigmentzubereitung für Korrosionsschutzanstrichstoffe**

Pigment preparation for anti-corrosive paints

Préparation pigmentaire pour peintures anticorrosives

(84) Benannte Vertragsstaaten:
**DE ES FR GB IT**

(30) Priorität: **02.04.1994 DE 4411568**

(43) Veröffentlichungstag der Anmeldung:
**04.10.1995 Patentblatt 1995/40**

(73) Patentinhaber: **MERCK PATENT GmbH
64293 Darmstadt (DE)**

(72) Erfinder:
- **Glausch, Ralf, Dr.
D-64297 Darmstadt (DE)**
- **Reinhard, Georg, Prof. Dr.
D-01097 Dresden (DE)**
- **Jircik, Renate
D-01217 Dresden (DE)**
- **Rammelt, Ursula, Dr.
D-01217 Dresden (DE)**

(56) Entgegenhaltungen:
**EP-A- 0 587 038** **DD-A- 281 427**

- **DATABASE WPI Week 8701 Derwent Publications Ltd., London, GB; AN 87-005072 XP002038813 & RO 89 434 A (INST. PIELARIE INCALTAMIN & INTR. CHIM. VICTORIA), 30. Mai 1986**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 675 173 B1

## Beschreibung

Die Erfindung betrifft blei- und chromatfreie Pigmentzubereitungen für die Formulierung von Korrosionsschutzanstrichstoffen.

Metallische Gegenstände können vor Korrosionen geschützt werden, indem sie mit einer metallischen, anorganischen oder organischen Schutzschicht überzogen werden. Insbesondere die organischen Schutzschichten werden zur Erhöhung ihres Korrosionsschutzvermögens mit speziellen Pigmenten und/oder Füllstoffen versehen. Dazu gehören Bleimennige, Zinkchromat, Zinkphosphat, Talkum, Graphit und Glimmer. Es werden aber auch organische Verbindungen als Korrosionsschutzpigmente allein oder in Kombination mit anorganischen Pigmenten und Füllstoffen eingesetzt. Solche organischen Verbindungen sind beispielsweise Benzidinphosphat, Benzidinmolybdat, Benzidinhexacyanoferrat, organische Phosphon- und Arsonsäuren und aromatische sowie aliphatische Karbonsäuren und deren Salze, wie Benzoate und Laureate.

Weiterhin sind als korrosionsvermindernde Stoffe zum Schutz metallischer Oberflächen monomere und polymere chelatbildende Verbindungen, wie zum Beispiel metallfreies oder metallhaltiges Tetraarylporphyrin oder Tetraazaannulen aus DD 281 427 bekannt.

Die hochwirksamen Blei- und Chromatpigmente können infolge ihrer toxischen oder karzinogenen Eigenschaften nicht mehr für den Korrosionsschutz eingesetzt werden. Die an ihrer Stelle bisher verwendeten Pigmente Zinkphosphat und Zinktetraborat besitzen nur eine vergleichsweise geringe Wirksamkeit.

Zinksalze bedürfen zunächst der Substratkorrosion, wie zum Beispiel bei Eisen:

$$Fe \rightarrow Fe^{2+} + 2^{e-}$$

$$\tfrac{1}{2}O_2 + H_2O + 2^{e-} \rightarrow 2\ OH^-$$

und sollen dann mit den entstandenen $OH^-$-Ionen basische, schwerlösliche Komplexe bilden. Diese sollen entweder auf der Substratoberfläche fest haften oder in Defekten einer Korrosionsschutzgrundierung ausgefällt werden und diese verstopfen. Das setzt voraus, daß einerseits das entsprechende Zinksalz in ausreichender Pigmentvolumenkonzentration vorhanden ist und nicht infolge seiner Wasserlöslichkeit inzwischen ausgewaschen wurde und andererseits keine anderen komplexbildenden Spezies in der Beschichtung oder dem angrenzenden korrosiven Medium vorhanden sind. Daher versagen die Zinksalzpigmente häufig bzw. sind in ihrer Wirkung den klassischen Aktivpigmenten Bleimennige und Zinkchromat deutlich unterlegen.

Es besteht deshalb ein Bedarf an blei- und chromatfreien Pigmenten oder Pigmentzubereitungen, die für Grundanstriche auf korrosionsanfälligen Metallen verwendet werden können und eine Korrosionsschutzwirkung entfalten, die der Schutzwirkung von Blei- und Chromatpigmenten ebenbürtig ist.

Der Erfindung liegt die Aufgabe zugrunde, eine Pigmentzubereitung bereitzustellen, die in Anstrichstofformulierungen auf Basis üblicher Bindemittel einarbeitbar ist und als Grundierung auf den verschiedensten Metallsubstraten, insbesondere auf Eisenwerkstoffoberflächen, Korrosionsschutzeigenschaften besitzt, die mit der Schutzwirkung von Blei- und Chromatpigmenten vergleichbar ist. Diese Pigmentzubereitung soll nicht nur unter atmosphärischer Belastung, sondern auch in belüfteten wäßrigen Medien ausgeprägte Korrosionsschutzeigenschaften besitzen.

Diese Aufgabe wird gemäß der vorliegenden Erfindung durch eine Pigmentzubereitung gelöst, enthaltend

(i) 3-40 Masse-% einer monomeren und/oder polymeren, metallfreien oder metallhaltigen, Chelat-Komplex-Verbindung gemäß den allgemeinen Formeln **I** und **II**

I

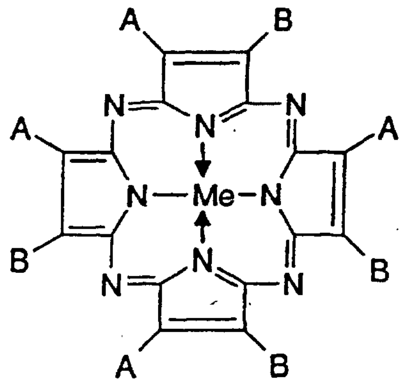

II

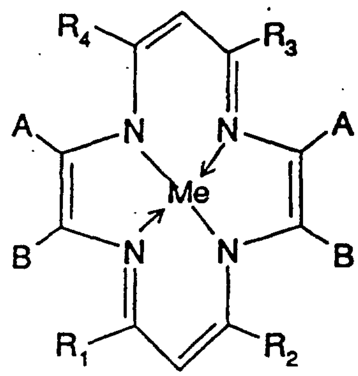

worin

| | |
|---|---|
| A und B | jeweils unabhängig voneinander einen aromatischen oder cycloaliphatischen Rest, der auch Heteroatome, wie S, Se, O und N, sowie Aryl-, Alkyl-, Halogen-, sauerstoff-, schwefel- oder stickstoffhaltige Gruppen als zusätzliche Substituenten enthalten kann, |
| $R^1$, $R^2$, $R^3$ und $R^4$ | H-Atome oder Alkylreste und |
| Me | Fe, Ni, Co, Mn, Bi, Sn, Zn oder $H_2$ |

bedeuten,

(ii) 3-40 Masse-% eines plättchenförmigen Materials und

(iii) 25-80 Masse-% eines Hydroxylionen bindenden Materials.

In einer weiteren Ausführungsform enthält die erfindungsgemäße Pigmentzubereitung zusätzlich 5-65 Masse-% eines leitfähigen Pigmentes.

Die Einzelkomponenten ergänzen sich in den erfindungsgemäßen Pigmentzubereitungen jeweils zu 100 %.

Als Chelat-Komplex-Verbindungen (i) werden die oben genannten, mit den allgemeinen Formeln **I** und **II** charakterisierten Verbindungen, vorzugsweise Phthalocyanine, Tetraarylporphyrine und Tetraazaannulene, eingesetzt. Unter den Phthalocyaninen sind Metallphthalocyanine und insbesondere Eisenphthalocyanin bevorzugt.

Dem Problem der durch das Metallphthalocyanin bedingten hohen Herstellungskosten kann dadurch begegnet werden, daß man diese Wirkkomponente auf leitfähige Trägermaterialien, wie oberflächenmodifizierten Glimmer und/oder Graphit, aufbringt und dadurch mit weit weniger der eigentlichen Wirksubstanz Metallphthalocyanin bei gleichem oder sogar verstärktem Korrosionsschutzeffekt auskommt.

Die Chelat-Komplex-Verbindungen sind in der erfindungsgemäßen Pigmentzubereitung in einem Anteil von 3 bis 25 Masse-%, vorzugsweise 15 bis 25 Masse-%, enthalten. Die Chelat-Komplex-Verbindungen reduzieren Sauerstoff, der in Wasser gelöst über durchgängige Poren und Defekte in der Beschichtung bis zum Metallsubstrat vordringt, wodurch das freigelegte Metallsubstrat passiviert wird. Gleichzeitig entstehen durch die Reduktion des Sauerstoffs Hydroxylionen:

$$O_2 + 2\,H_2O + 4^{e^-} \rightarrow 4\,OH^-.$$

Diese Hydroxylionen werden durch die Komponente (iii) der erfindungsgemäßen Pigmentzubereitung gebunden.

Als plättchenförmiges Material (ii) werden natürlicher oder synthetischer Glimmer und andere Schichtsilikate, wie Talk, Kaolin, Sericit oder auch Glasplättchen verwendet.

Bevorzugte plättchenförmige Materialien sind Glimmer und plättchenförmige Pigmente, die gemäß der internationalen Anmeldung PCT/ EP92/02 351 hergestellt werden. Sie bestehen aus einer transparenten, anorganischen

plättchenförmigen Matrix, vorzugsweise Siliciumdioxid. Die Matrix wird durch Verfestigung eines flüssigen Precursors auf einem endlosen Band hergestellt. In diese Matrix können noch zusätzliche Inhaltsstoffe eingearbeitet werden.

Die plättchenförmigen Materialien haben typischerweise eine Dicke zwischen 0,05 und 5 μm und insbesondere zwischen 0,2 und 2 μm. Die Ausdehnung in den beiden anderen Dimensionen beträgt zwischen 1 und 250 μm und insbesondere zwischen 5 und 60 μm. Das Verhältnis der Ausdehnung in der Hauptdimension zur Dicke (aspect ratio) beträgt mehr als 3 und vorzugsweise mehr als 5.

In Vermischung mit dem plättchenförmigen Material ordnen sich die einzelnen Bestandteile der erfindungsgemäßen Pigmentzubereitung in Anstrichstoffen gleichmäßig und vom Filmbildner fest umschlossen ein und führen zu Schichten hoher Barrierewirkung für den Antransport des korrosiven wäßrigen Mediums zur Metalloberfläche und den Abtransport der dann dort entstehenden Korrosionsprodukte nach außen.

Erfindungsgemäß werden als Hydroxylionen bindende Materialien (iii) Metaphosphate, Bi- und Triphosphate, Kieselgele, Silikate, Alumosilikate, Calcit und alle schwerlöslichen Metallsalze, die schwerlösliche basische Salze oder Komplexverbindungen mit $OH^-$-Ionen bilden, eingesetzt. So wird beispielsweise aus $Ca[SiO_3]$ durch Aufnahme von Hydroxylionen $Ca_3(OH)_2[Si_4O_{10}]$ gebildet.

Weiterhin können solche Verbindungen verwendet werden, die an ihrer Oberfläche ein Puffersystem bilden, das den pH-Wert des angrenzenden, wäßrigen Mediums in den Bereich $6 \leq pH \leq 8,5$ fixiert, der für die Delamination organischer Beschichtungen auf Stahlsubstraten als ungefährlich gilt:

$$R - COO^- + H_2O \rightleftarrows R - COOH + OH^-$$

Bevorzugt wird Calciummetaphosphat verwendet, das die bei der Reduktion des Sauerstoffs entstehenden Hydroxylionen bindet.

Das Hydroxylionen bindende Material ist in der erfindungsgemäßen Pigmentzubereitung in einem Anteil von 25 bis 80 Masse-%, vorzugsweise 40 bis 60 Masse-%, enthalten.

In einer weiteren Ausführungsform enthält die erfindungsgemäße Pigmentzubereitung zusätzlich 5 bis 65 Masse-%, vorzugsweise 15 bis 55 Masse-%, eines leitfähigen Pigmentes. Das leitfähige Pigment besteht entweder aus einem Trägermaterial, das mit einer leitfähigen Schicht überzogen ist oder das Pigment wird allein durch das leitfähige Material gebildet, wie zum Beispiel im Falle von Ruß oder Graphit. Geeignete Trägermaterialien sind Glimmer, Bariumsulfat, Siliciumdioxid oder Titandioxid. Als leitfähige Schichten kommen Antimon dotiertes Zinnoxid, Halogen dotiertes Zinnoxid oder Aluminium dotiertes Zinkoxid in Frage. Diese leitfähigen Materialien können auch das Pigment allein bilden. Ein im Handel verfügbares leitfähiges Pigment ist beispielsweise Minatec®CM 30 von E. MERCK, Darmstadt. Es handelt sich um einen mit Titandioxid beschichteten Glimmer, der mit einer Schicht aus Antimon dotiertem Zinnoxid überzogen ist.

Durch das leitfähige Pigment wird die für die katalysierte Sauerstoffreduktion erforderliche elektronische Leitfähigkeit der erfindungsgemäßen Pigmentzubereitung besser gewährleistet.

Durch die Bindung der bei der Sauerstoffreduktion entstehenden Hydroxylionen wird eine Delamination der Beschichtung vom Metallsubstrat verhindert, so daß es nicht zu einer Unterfilmkorrosion, bei Eisenwerkstoffen als Unterrostung bezeichnet, kommt.

Die erfindungsgemäße Pigmentzubereitung wird aus den Einzelkomponenten mit den in der Pigment- und Anstrichmittelindustrie üblichen Maschinen, wie Sand- oder Perlmühlen, Kugelmühlen und Walzenmühlen in praxisgerechter Mahlfeinheit hergestellt und in Anstrichformulierungen auf Basis üblicher Bindemittel dispergiert. Es können aber auch die einzelnen Komponenten nacheinander im Bindemittel dispergiert werden. Derartige Bindemittel sind Alkydharze, Polyurethane, chlorierter Kautschuk oder Melaminharze, die in einer Menge von 35 bis 55 Masse-% in den Anstrichformulierungen enthalten sind.

Weitere Bestandteile sind in einer Menge von bis zu 2 Masse-% Sikkative und Hilfsstoffe, wie z.B. Dispergiermittel, Verlaufsmittel, Antiabsetzmittel, Haftmittel oder Thixotropiermittel. Außerdem sind noch Lösungsmittel in einem Anteil von 10 bis 20 Masse-% enthalten, die auf das jeweilige Bindemittel fachgemäß abgestimmt werden müssen. Übliche Lösungsmittel sind Butylacetat, Xylen und Paraffinkohlenwasserstoffgemische im Siedebereich von 120 bis 180 °C.

Die erfindungsmäße Pigmentzubereitung wird für Anstrichformulierungen, die auf den verschiedensten Metallsubstraten, insbesondere auf Eisenwerkstoffoberflächen, als Grundierung appliziert werden, eingesetzt. Die Grundierung zeichnet sich nach Abschluß der Filmbildung unter atmosphärischer Belastung oder Exposition in belüfteten wäßrigen Medien durch ausgeprägte Korrosionsschutzeigenschaften aus.

Die erfindungsgemäße Pigmentzubereitung erfüllt alle Anforderungen, die an Pigmente für Korrosionsschutzgrundierungen gestellt werden.

Sie beeinträchtigt weder die Verlaufs- noch die Filmbildungseigenschaften des Anstrichstoffes und führt stattdessen zu einer gleichmäßigen, auf Metallsubstraten festhaftenden und besonders alterungsbeständigen Schicht mit

hoher Barrierewirkung; sie schränkt auch nicht die Überstreichbarkeit der erzeugten Grundierung für den Aufbau von Mehrfachschichtsystemen ein und ist vor allem in der Lage, das Metallsubstrat in Poren oder in durch mechanische Einflüsse entstandenen Defekten einer Beschichtung bei Einwirkung wäßriger Medien zu passivieren und dadurch die Unterfilmkorrosion, bei Eisenwerkstoffen als Unterrostung bezeichnet, zu verhindern.

Ein weiterer Vorteil der erfindungsgemäßen Pigmentzubereitungen ist es, daß sie auch in Anstrichstofformulierungen, die Zinkphosphat enthalten, verwendet werden können und die damit hergestellten Grundierungen in ihren Korrosionsschutzeigenschaften sogar den mit Zinkchromat pigmentierten deutlich überlegen sind.

Erfindungsgemäße Pigmentzubereitungen wurden in Bindemittelsysteme nach in der Lackindustrie üblichen Misch- und Dispergierverfahren eingearbeitet, wobei die Komfeinheit unter 20 µm lag. Durch die für das jeweilige Bindemittel geeigneten Verdünnungsmittel erhielten die Anstrichstoffe mit den erfindungsgemäßen Pigmentzubereitungen die zur Verarbeitung erforderliche Viskosität. Diese Verdünnungsmittel, üblicherweise handelt es sich um Butylacetat, Xylen und Paraffinkohlenwasserstoffe im Siedebereich von 120 bis 180 °C kann der Fachmann den Lackrohstofftabellen von Karsten, verlegt im Vincentz-Verlag, entnehmen. Auf diese Weise wurden fünf Anstrichstoffe hergestellt, mit denen Probebleche aus einem Massenstahl beschichtet wurden. Diese Probebleche wurden folgenden Prüfungen unterzogen, wobei gleichzeitig ein Vergleich mit zwei Referenzsystemen, einem Zinkphosphat- und einem Zinkchromat-haltigen Anstrich, erfolgte:

a) Freibewitterung nach DIN 53166
b) MACHU-Test, Wechselbeanspruchung nach 8 h Tauchen in eine Lösung aus 50 g NaCl, 10 ml Eisessig, 5 g 30 %ige Wasserstoffperoxidlösung je Liter dest. Wasser (täglich frisch) bei 40 °C und 16 h Exposition in trockener Luft bei Zimmertemperatur je Zyklus
c) Wechselklimatest nach VDA 621-415

Ergebnisse der Korrosionsschutzprüfungen

a) Freibewitterung nach DIN 53166

Nach einer Auslagerungszeit von 12 Monaten ist der eingebrachte Ritz bei den durch das Referenzsystem I oder II beschichteten Proben in einem Umfeld von 2 bis 3 mm Breite dicht von kleinen Blasen umgeben, während bei allen Beschichtungen die mit den erfindungsgemäßen Pigmentkombinationen noch keine Blasenbildung aufgetreten ist.

b) MACHU-Test (8 Zyklen)

Beurteilt wurde der Blasengrad der Beschichtungen nach DIN 53209 und der korrodierte Flächenanteil bezogen auf die Gesamtfläche, nachdem die Beschichtung nach 8 Zyklen Belastung abgelöst worden war:

| Beschichtung | Blasengrad | Anteil korrodierter Fläche in % |
|---|---|---|
| Referenzsystem I | $m^3/g^3$ | 42 |
| Referenzsystem II | $m^4/g^4$ | 60 |
| Beispiel 1 | 0/0 | < 1 |
| Beispiel 2 | 0/0 | < 1 |
| Beispiel 3 | $m^1/g^1$ | < 1 |
| Beispiel 4 | 0/0 | < 1 |
| Beispiel 5 | $m^1/g^1$ | ca. 1 |

c) Wechselklimatest nach VDA 621-415

Nach 9 Zyklen Wechselklimabeanspruchung zeigen die Referenzsysteme eine stellenweise bis zu 3 mm fortgeschrittene Unterrostung am Ritz, während sich dieser Vorgang an den erfindungsgemäßen Proben noch nicht eindeutig fixieren läßt (< 1 mm).

Die Ergebnisse zeigen, daß die mit den erfindungsgemäßen Pigmentzubereitungen hergestellten Schutzanstriche auf Eisenwerkstoffoberflächen im Vergleich zu den Referenzsystemen einen deutlich besseren Schutz gegen Korrosion bewirken, obwohl Referenzsystem II ein hochwirksames Chromatpigment enthält.

Die komplette Offenbarung aller vor- und nachstehend aufgeführten Anmeldungen, Patente und Veröffentlichungen ist durch Bezugnahme in dieser Anmeldung enthalten.

Die nachfolgenden Beispiele sollen die Erfindung näher erläutern, ohne sie jedoch zu beschränken.

Beispiel 1

| | |
|---|---|
| Eisenphthalocyanin | 6,3 Masse-% |
| Minatec 30 CM | 6,3 Masse-% |
| Glimmer | 3,1 Masse-% |
| Ca-m-Phosphat | 12,6 Masse-% |
| Zinkphosphat (Hopeit) | 6,3 Masse-% |
| Harzlösung, 60%ig in Xylen (luft- und wärmetrocknendes kurzöliges Alkydharz) | 48,8 Masse-% |
| Lösungsmittel | 15,1 Masse-% |
| Sikkative und Hilfsstoffe | 1,5 Masse-% |

Beispiel 2

| | |
|---|---|
| Eisenphthalocyanin | 4,4 Masse-% |
| Glimmer | 4,4 Masse-% |
| Ca-m-Phosphat | 17,5 Masse-% |
| Zn-m-Phosphat | 8,7 Masse-% |
| Harzlösung, 60%ig in Xylen (luft- und wärmetrocknendes kurzöliges Alkydharz) | 48,7 Masse-% |
| Lösungsmittel | 14,6 Masse-% |
| Sikkative und Hilfsstoffe | 1,7 Masse-% |

Beispiel 3

| | |
|---|---|
| Eisenphthalocyanin | 6,05 Masse-% |
| Minatec 30 CM | 6,07 Masse-% |
| Glimmer | 2,99 Masse-% |
| Ca-m-Phosphat | 15,09 Masse-% |
| Zinkweiß | 6,05 Masse-% |
| Harzlösung wie Beispiel 1 | 47,82 Masse-% |
| Lösungsmittel | 14,36 Masse-% |
| Sikkative und Hilfsstoffe | 1,57 Masse-% |

Beispiel 4

| | |
|---|---|
| Eisenphthalocyanin | 5,68 Masse-% |
| Minatec 30 CM | 5,68 Masse-% |
| Glimmer | 2,82 Masse-% |
| Ca-m-Phosphat | 17,00 Masse-% |
| Zn-Tetraborat | 2,81 Masse-% |
| Harzlösung wie Beispiel 1 | 49,51 Masse-% |
| Lösungsmittel | 14,86 Masse-% |
| Sikkative und Hilfsstoffe | 1,64 Masse-% |

Beispiel 5

| | |
|---|---|
| Eisenphthalocyanin | 7,13 Masse-% |
| Minatec 30 CM | 7,14 Masse-% |
| Glimmer | 3,56 Masse-% |
| Ca-m-Phosphat | 14,26 Masse-% |
| Zinkphosphat | 7,10 Masse-% |
| Harzlösung Plexigum PM 685 (Acrylharz in Xylen) | 42,47 Masse-% |
| Lösungsmittel | 17,51 Masse-% |
| Sikkative und Hilfsstoffe | 0,83 Masse-% |

Vergleichsbeispiel 1

| | |
|---|---|
| Zinkphosphat | 7,20 Masse-% |
| Zinkweiß (Zinkoxid) | 11,63 Masse-% |
| Mikrotalkum N | 6,19 Masse-% |
| Bayferrox 140 (Eisenoxidrot) | 13,36 Masse-% |
| Blanc fixe | 6,19 Masse-% |
| Harzlösung wie Beispiel 1 | 41,64 Masse-% |
| Lösungsmittel | 12,5 Masse-% |
| Sikkative und Hilfsstoffe | 1,29 Masse-% |

Vergleichsbeispiel 2

| | |
|---|---|
| Zinkgelb (Zinkchromat) | 7,63 Masse-% |
| Zinkweiß | 11,63 Masse-% |
| Mikrotalkum AT 1 | 6,19 Masse-% |
| Bayferrox 140 | 13,36 Masse-% |
| Blanc fixe | 6,19 Masse-% |
| Harzlösung wie Beispiel 1 | 41,21 Masse-% |
| Lösungsmittel | 12,5 Masse-% |
| Sikkative und Hilfsstoffe | 1,29 Masse-% |

Beispiel 6

Eine auf Aluminium und feuerverzinktem Stahluntergrund hergestellte Beschichtung mit einer Formulierung gemäß Ausführungsbeispiel 5 (zweischichtig mit 80 µm Gesamtschichtdicke) zeigt nach 12 Monaten Freibewitterung gemäß DIN 53166 weder in der Nähe des Ritzes noch auf der sonstigen Probenfläche Blasen- oder Enthaftungserscheinungen. Die gute Haftung wird durch Prüfung nach der Abreißmethode belegt:

- ohne Wasserbeanspruchung 4...7 MPa
- nach 9 d Dauertauchen in dest. Wasser 5...12 MPa,

wobei der Bruch überwiegend nicht an der Phasengrenze Substrat/Beschichtung, sondern innerhalb der Beschichtung erfolgt (Kohäsionsbruch). Anstrichstoffe mit den erfindungsgemäßen Pigmentzubereitungen sind folglich nicht nur zur Anwendung für Eisenwerkstoffe, sondern bei Wahl eines geeigneten Bindemittels auch für andere korrodierende Metalle zum Zwecke eines wirksamen Korrosionsschutzes einsetzbar.

## Patentansprüche

**1.** Pigmentzubereitung für Korrosionsschutzanstrichstoffe, enthaltend

(i) 3-40 Masse-% einer monomeren und/oder polymeren, metallfreien oder metallhaltigen chelatbildenden Verbindung gemäß den allgemeinen Formeln **I** und **II**

**I**

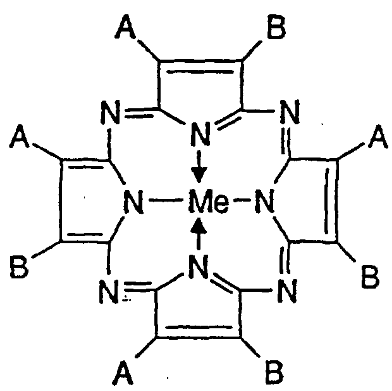

**II**

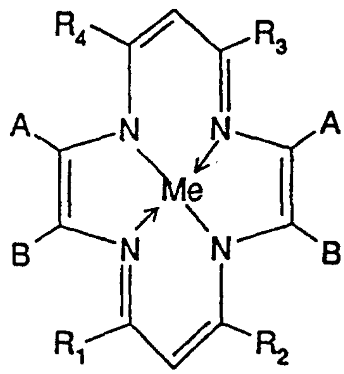

worin

| | |
|---|---|
| A und B | jeweils unabhängig voneinander einen aromatischen oder cycloaliphatischen Rest, der auch Heteroatome, wie S, Se, O und N, sowie Aryl-, Alkyl-, Halogen-, sauerstoff-, schwefel- oder stickstoffhaltige Gruppen als zusätzliche Substituenten enthalten kann, |
| $R^1$, $R^2$, $R^3$ und $R^4$ | H-Atome oder Alkylreste und |
| Me | Fe, Ni, Co, Mn, Bi, Sn, Zn oder $H_2$ |

bedeuten,

(ii) 3-40 Masse-% eines plättchenförmigen Materials und

(iii) 25-80 Masse-% eines Hydroxylionen bindenden Materials.

**2.** Pigmentzubereitung nach Anspruch 1, **dadurch gekennzeichnet, daß** sie

(i) 3-40 Masse-% einer monomeren und/oder polymeren, metallfreien oder metallhaltigen chelatbildenden Verbindung gemäß den allgemeinen Formeln **I** und **II**

I

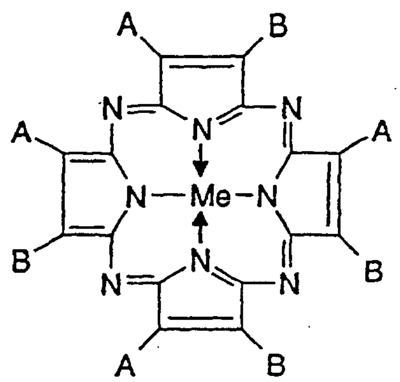

II

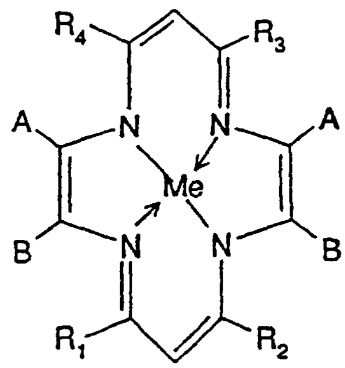

worin

A und B jeweils unabhängig voneinander einen aromatischen oder cycloaliphatischen Rest, der auch Heteroatome, wie S, Se, O und N, sowie Aryl-, Alkyl-, Halogen-, sauerstoff-, schwefel- oder stickstoffhaltige Gruppen als zusätzliche Substituenten enthalten kann,

$R^1$, $R^2$, $R^3$ und $R^4$ H-Atome oder Alkylreste und

Me Fe, Ni, Co, Mn, Bi, Sn, Zn oder $H_2$

bedeuten,

(ii) 3-40 Masse-% eines plättchenförmigen Materials,

(iii) 25-80 Masse-% eines Hydroxylionen bindenden Materials und zusätzlich

(iv) 5-65 Masse-% eines leitfähigen Pigmentes enthält.

**3.** Pigmentzubereitung nach mindestens einem der Ansprüche 1 und 2, **dadurch gekennzeichnet, daß** die chelatbildende Verbindung ein Phthalocyanin ist.

**4.** Pigmentzubereitung nach mindestens einem der Ansprüche 1 bis 3, **dadurch gekennzeichnet, daß** das Phthalocyanin ein Metallphthalocyanin ist.

**5.** Pigmentzubereitung nach mindestens einem der Ansprüche 1 bis 4, **dadurch gekennzeichnet, daß** das Metallphthalocyanin ein Eisenphthalocyanin ist.

**6.** Pigmentzubereitung nach mindestens einem der Ansprüche 1 bis 5, **dadurch gekennzeichnet, daß** das plättchenförmige Material ein Schichtsilikat, Glas oder Siliciumdioxid ist.

**7.** Pigmentzubereitung nach mindestens einem der Ansprüche 1 bis 6, **dadurch gekennzeichnet, daß** das Schichtsilikat natürlicher oder synthetischer Glimmer ist.

**8.** Pigmentzubereitung nach mindestens einem der Ansprüche 1 bis 7, **dadurch gekennzeichnet, daß** das Hydroxylionen bindende Material ein Metaphosphat, Bi- oder Triphosphat ist.

**9.** Verwendung der Pigmentzubereitung nach den Ansprüchen 1 bis 8 für Korrosionsschutzgrundierungen.

**10.** Korrosionsschutzanstrichstoff, enthaltend die Pigmentzubereitung nach den Ansprüchen 1 bis 8.

**Claims**

**1.** Pigment preparation for anti-corrosion coating materials, containing

(i) 3-40% by mass of a monomeric and/or polymeric, metal-free or metal-containing chelate-forming compound of the general formulae I and II

I

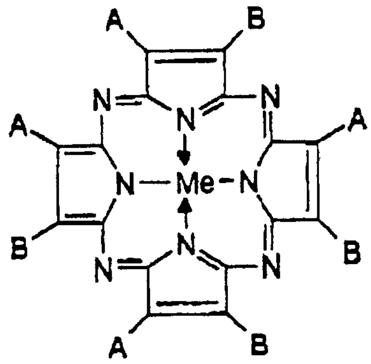

II

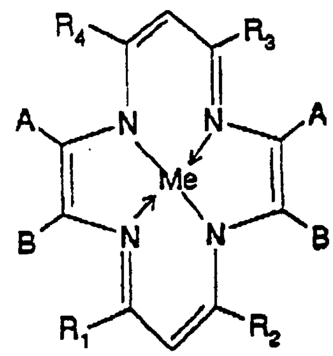

in which

| | |
|---|---|
| A and B | are each independently of the other an aromatic or cycloaliphatic radical which may also contain heteroatoms, such as S, Se, O and N, and aryl, alkyl, halogen, oxygen-, sulphur- or nitrogen-containing groups as additional substituents, |
| $R^1$, $R^2$ $R^3$ and $R^4$ | are H atoms or alkyl radicals and |
| Me | is Fe, Ni, Co, Mn, Bi, Sn, Zn or $H_2$, |

(ii) 3-40% by mass of a material in flake form and

(iii) 25-80% by mass of a material which binds hydroxide ions.

**2.** Pigment preparation according to Claim 1, **characterized in that** it contains

(i) 3-40% by mass of a monomeric and/or polymeric, metal-free or metal-containing chelate-forming compound of the general formulae I and II

I

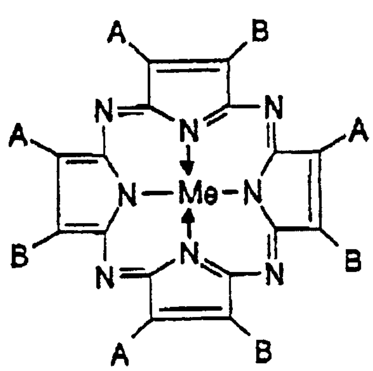

II

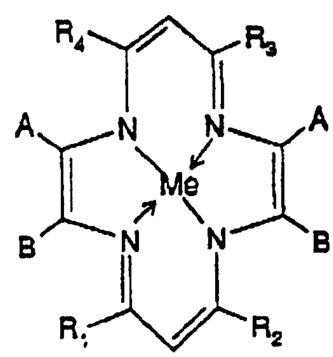

in which

A and B are each independently of the other an aromatic or cycloaliphatic radical which may also contain heteroatoms, such as S, Se, O and N, and aryl, alkyl, halogen, oxygen-, sulphur- or nitrogen-containing groups as additional substituents,

$R^1$, $R^2$ $R^3$ and $R^4$ are H atoms or alkyl radicals and

Me is Fe, Ni, Co, Mn, Bi, Sn, Zn or $H_2$,

(ii) 3-40% by mass of a material in flake form and

(iii) 25-80% by mass of a material which binds hydroxide ions and in addition

(iv) 5-65% by mass of a conductive pigment.

**3.** Pigment preparation according to at least one of Claims 1 and 2, **characterized in that** the chelate-forming compound is a phthalocyanine.

**4.** Pigment preparation according to at least one of Claims 1 to 3, **characterized in that** the phthalocyanine is a metal phthalocyanine.

**5.** Pigment preparation according to at least one of Claims 1 to 4, **characterized in that** the metal phthalocyanine is an iron phthalocyanine.

**6.** Pigment preparation according to at least one of Claims 1 to 5, **characterized in that** the material in flake form is a phyllosilicate, glass or silicon dioxide.

**7.** Pigment preparation according to at least one of Claims 1 to 6, **characterized in that** the phyllosilicate is natural or synthetic mica.

**8.** Pigment preparation according to at least one of Claims 1 to 7, **characterized in that** the material which binds hydroxide ions is a metaphosphate, di- or triphosphate.

**9.** Use of the pigment preparation according to Claims 1 to 8 for anti-corrosion primers.

**10.** Anti-corrosion coating material, containing the pigment preparation according to Claims 1 to 8.

## Revendications

**1.** Composition de pigment pour peintures anticorrosion, contenant

(i) 3-40 % en masse d'un composé chélateur monomère et/ou polymère, exempt de métal ou contenant un métal, correspondant aux formules générales I et II

I

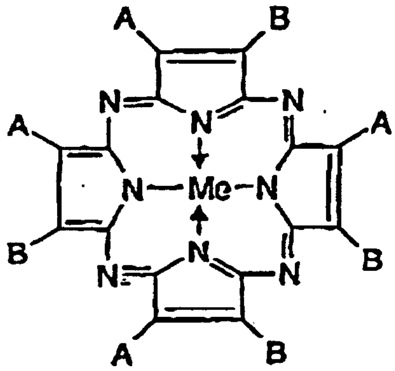

II

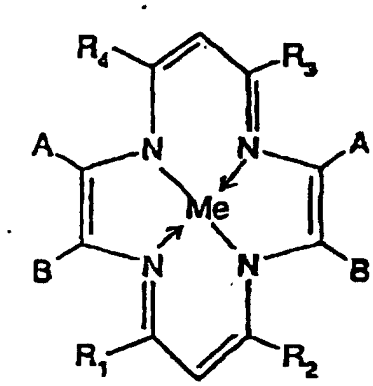

dans lesquelles

| | |
|---|---|
| A et B | représentent chacun, indépendamment l'un de l'autre, un radical aromatique ou cycloaliphatique qui peut également contenir des hétéroatomes tels que S, Se, O et N, ainsi que des groupes contenant un aryle, un alkyle, un halogène, un oxygène, un soufre ou un azote, en tant que substituants supplémentaires, |
| $R^1$, $R^2$, $R^3$ et $R^4$ | représentent des atomes d'hydrogène ou des radicaux alkyle, et |
| Me | représente Fe, Ni, Co, Mn, Bi, Sn, Zn ou $H_2$, |

(ii) 3-40 % en masse d'un matériau en paillettes et
(iii) 25-80 % en masse d'un matériau fixant des ions hydroxyle.

**2.** Composition de pigment selon la revendication 1, contenant

(i) 3-40 % en masse d'un composé chélateur monomère et/ou polymère, exempt de métal ou contenant un métal, correspondant aux formules générales I et II

I

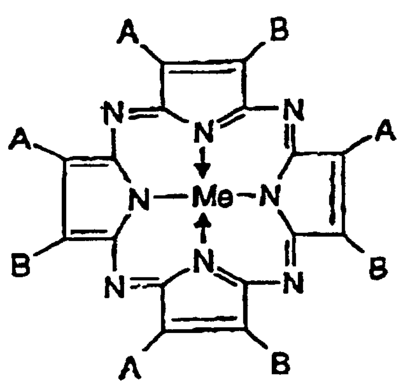

II

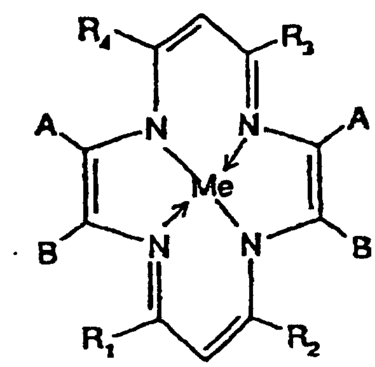

dans lesquelles

| | |
|---|---|
| A et B | représentent chacun, indépendamment l'un de l'autre, un radical aromatique ou cydoaliphatique qui peut également contenir des hétéroatomes tels que S, Se, O et N, ainsi que des groupes contenant un aryle, un alkyle, un halogène, un oxygène, un soufre ou un azote, en tant que substituants supplémentaires, |
| $R^1$, $R^2$, $R^3$ et $R^4$ | représentent des atomes d'hydrogène ou des radicaux alkyle, et |
| Me | représente Fe, Ni, Co, Mn, Bi, Sn, Zn ou $H_2$, |

(ii) 3-40 % en masse d'un matériau en paillettes et
(iii) 25-80 % en masse d'un matériau fixant des ions hydroxyle et en outre
(iv) 5-65 % en masse d'un pigment conducteur.

**3.** Composition de pigment selon au moins l'une des revendications 1 et 2, **caractérisée en ce que** le composé chélateur est une phtalocyanine.

**4.** Composition de pigment selon au moins l'une des revendications 1 à 3, **caractérisée en ce que** la phtalocyanine est une métallophtalocyanine.

**5.** Composition de pigment selon au moins l'une des revendications 1 à 4, **caractérisée en ce que** la métallophtalocyanine est la phtalocyanine de fer.

**6.** Composition de pigment selon au moins l'une des revendications 1 à 5, **caractérisée en ce que** le matériau en paillettes est un silicate lamellaire, le verre ou le dioxyde de silicium.

**7.** Composition de pigment selon au moins l'une des revendications 1 à 6, **caractérisée en ce que** le silicate lamellaire est un mica naturel ou synthétique.

**8.** Composition de pigment selon au moins l'une des revendications 1 à 7, **caractérisée en ce que** le matériau fixant des ions hydroxyle est un métaphosphate, bi- ou triphosphate.

**9.** Utilisation de la composition de pigment selon les revendications 1 à 8, pour des apprêts anticorrosion.

**10.** Peinture anticorrosion contenant la composition de pigment selon les revendications 1 à 8.